# NEUE EUROPÄISCHE PATENTSCHRIFT

(11) **EP 1 846 681 B2**
(45) Veröffentlichungstag und Bekanntmachung des Hinweises auf die Entscheidung über den Einspruch: **11.12.2024**
(45) Hinweis auf die Patenterteilung: 13.08.2008
(21) Anmeldenummer: 06706239.8
(22) Anmeldetag: 16.01.2006
(51) Int. Cl.: F16K 31/04, H01R 31/06

(54) **VORRICHTUNG ZUR STEUERUNG DER SCHALTBEWEGUNG EINES VENTILS**
DEVICE FOR CONTROLLING THE SWITCHING MOVEMENT OF A VALVE
DISPOSITIF POUR COMMANDER LE MOUVEMENT DE COMMUTATION D'UNE SOUPAPE

(30) Priorität: 10.02.2005 DE 102005005955
(43) Veröffentlichungstag der Anmeldung: 24.10.2007
(73) Patentinhaber: GEA Tuchenhagen GmbH, 21514 Büchen (DE)
(72) Erfinder: PORATH, Bernd, 23881 Breitenfelde (DE)
(74) Vertreter: Hauck Patentanwaltspartnerschaft mbB
(86) Internationale Anmeldenummer: PCT/EP2006/000305
(87) Internationale Veröffentlichungsnummer: WO 2006/084541

(56) Entgegenhaltungen:
- EP-A1- 0 380 234
- WO-A1-02/093058
- US-A- 4 683 454
- US-A- 6 106 307
- US-B1- 6 468 092

## Beschreibung

### TECHNISCHES GEBIET

Die Erfindung betrifft eine Vorrichtung zur Steuerung der Schaltbewegung eines Ventils, wobei die Steuervorrichtung modular strukturiert ist und das Ventil wenigstens eine ein Schließglied tragende, translatorisch oder rotativ bewegte Ventilstange aufweist, die Ventilstange(n) mittels eines druckmittelbeaufschlagten Ventilantriebes in zwei Endstellungen, eine Schließ- und eine Offenstellung, verbracht wird/werden, erforderlichenfalls wenigstens eine Ventilstange in eine zwischen diesen Endstellungen positionierte, eine Teiloffenstellung des zugeordneten Schließgliedes bildende Zwischenstellung verbracht wird, die Steuervorrichtung Mittel zur Steuerung des Druckmittels für den Ventilantrieb sowie einen Stellungsgeber aufweist, der wenigstens die Endstellungen und ggf. die Zwischenstellung der Ventilstange in Bezug auf ein festgelegtes Bezugssystem erfasst und diesbezügliche aktuelle Stellungsmeldungen liefert, und die Steuervorrichtung eine modulare, interne Steuereinheit aufweist, die einerseits mit einer externen Steuereinheit im Umfeld des Ventils im Datenaustausch steht und andererseits die Mittel zur Steuerung des Druckmittels ansteuert.

### STAND DER TECHNIK

Eine Vorrichtung zur Steuerung der Schaltbewegung eines Ventils, bei der die Verstellbewegung der Ventilstange durch ein Wegmess-System laufend überwacht wird und dabei feste Ventilstellungen, wie beispielsweise die volle Offenstellung oder die Schließstellung, ermittelt werden, ist aus der WO 02/093 058 A1 bekannt. Dabei besitzt die Vorrichtung Mittel zur Steuerung des Druckmittels für einen Ventilantrieb, weiterhin einen Stellungsmelder bzw. -geber, der an die Ventilstange angeschlossen ist und die die Ventilstangenbewegung abbildende aktuelle Stellung der Ventilstange in Bezug auf ein festgelegtes Bezugssystems fortlaufend erfasst und diesbezüglich aktuelle Stellungsmeldungen liefert, Mittel zur fortlaufenden Speicherung der aktuellen Stellungsmeldungen und darüber hinaus Mittel zur Berechnung und zum Vergleich von Daten aus vorgegebenen Daten und/oder im Zuge der Ventilbewegungen erfassten Daten. Dabei ist der Stellungsmelder als berührungsfrei arbeitende Positionsanzeigevorrichtung ausgebildet und sämtliche zur Steuerung des Ventils notwendigen Mittel sind in einem Steuerkopf angeordnet, der an der dem Ventilgehäuse abgewandten Seite des Ventilantriebes vorgesehen ist.

Weiterhin sind gegenüber dem vorgenannten Stand der Technik vereinfachte Vorrichtungen zur Steuerung der Schaltbewegung eines Ventils bekannt, bei denen auf eine kontinuierliche Wegmessung der Ventilstange verzichtet wird und am in Frage kommenden jeweiligen Ventil lediglich diskrete, feste Ventilstellungen über Stellungsgeber erfasst und an eine interne und/oder externe Steuerung des Ventils rückgemeldet werden. Dabei erfassen die Stellungsgeber die jeweilige Stellung der Ventilstange entweder berührend oder berührungsfrei. Als berührungsfrei arbeitende Stellungsgeber sind beispielsweise magnetisch arbeitende bekannt, die ein Schaltsignal generieren, wenn beispielsweise ein an der Ventilstange befestigter Permanentmagnet in die Nähe des ein magnetisches Feld detektierenden Stellungsgebers gelangt.

Die vorgenannten Vorrichtungen zur Steuerung der Schaltbewegung eines Ventils, nachfolgend kurz Steuervorrichtungen genannt, sind grundsätzlich derart aufgebaut, dass in einem am Ventilantrieb angeordneten Steuerkopf eine interne Steuereinheit vorgesehen ist, die einerseits mit einer externen Steuereinheit, beispielsweise einer speicherprogrammierbaren Steuerung (SPS), im Datenaustausch steht und andererseits Mittel zur Steuerung eines Druckmittels, sog. Pilotventile, ansteuert, die für die Versorgung des Ventilantriebs mit diesem Druckmittel vorgesehen sind. Dabei ist die interne Steuereinheit derart spannungsmäßig ausgelegt, dass mit der ihr zugrundeliegenden Steuerspannung einerseits die Pilotventile ansteuerbar sind und andererseits auch eine Kommunikation mit der externen Steuereinheit (SPS) möglich ist. In Deutschland hat sich beispielsweise eine Betriebsspannung von 24 Volt Gleichspannung (24 VDC) weitestgehend etabliert.

Die externen Steuereinheiten (SPS) werden in Deutschland, vornehmlich aber im Ausland, auch mit Wechselspannungen im Bereich von 20 bis 130 Volt (20 - 130 VAC) betrieben. Werden dann auch noch die Pilotventile mit einer anderen Spannung als 24 VDC betrieben, dann sind speziell an diese Spannungsverhältnisse angepasste Lösungen mit Blick auf die interne Steuereinheit notwendig, damit letztere in Richtung der externen Steuereinheit (SPS) einerseits und der Pilotventile andererseits kommunizieren kann.

Daraus ergibt sich bislang eine Vielfalt unterschiedlicher interner Steuereinheiten als Folge der vorgenannten unterschiedlichen Betriebsspannungen und auch als Folge des gegebenen unterschiedlichen Datenaustauschs. Ein derartiger Zustand ist unbefriedigend, da ein relativ großer Aufwand zur jeweiligen Aus- und/oder Umrüstung der Ventilsteuerungen notwendig ist. Eine Vorfertigung vielfältiger Ausstattungsvarianten bedeutet einen hohen Lagerbestand, falls man auf alle vorgenannten Varianten vorbereitet sein will. Eine Reduzierung dieses Lagerbestandes führt zur unwirtschaftlichen Fertigung kleiner Losgrößen. Weiterhin bedeutet eine derartige Vielfalt an Ausstattungsvarianten der Steuervorrichtung, dass ein entsprechender Entwicklungsaufwand getrieben werden muss, dass die Lagerhaltung hinsichtlich der Lagerverwaltung (Sachnummern) aufwändig ist und dass jede Ausstattungsvariante einer kostspieligen Zulassungsprüfung zu unterziehen ist.

Die Zahl der vorgenannte Ausstattungsvarianten wird noch erhöht, wenn, wie dies in vielen Fällen praktiziert wird, die interne Steuereinheit mittels einer zweiadrigen BUS-Leitung über einen sog. AS-Interface Modul, d.h. über Binär-Signale mit der externen Steuereinheit (SPS) kommuniziert.

In der US 4 683 454 A ist ein elektromagnetischer Antrieb mit einem elektrischen Anpassungsmodul offenbart, der ein Ventil zur Steuerung von Fluiden betätigt. Der jeweils zum Einsatz kommende Anpassungsmodul verbindet die interne elektrische Steuereinheit des elektromagnetischen Antriebs mit einem externen elektrischen Versorgungssystem, das in unterschiedlichster Ausprägung zur Verfügung stehen kann. Dabei bewerkstelligt der jeweilige Anpassungsmodul insbesondere die Anpassung des elektromagnetischen Antriebs an das jeweilige Kontaktierungssystems des externen elektrischen Versorgungssystems. Der Anpassungsmodul kann auch Mittel zur Wandlung und Anpassung externer elektrischer Spannungen (Gleich- und Wechselspannungen) an die intern notwendige Spannung des elektromagnetischen Antriebs vorsehen. Das Schließglied des Ventils greift dabei mit einem schaftförmigen Ende in das elektrische Spulensystem des elektromagnetischen Antriebs ein und wird dadurch unmittelbar betätigt. Pilotventile zur Steuerung eines Druckmittels sind daher nicht erforderlich. Der bekannte elektromagnetische Antrieb verfügt in Verbindung mit dem Ventil über keinen Stellungsgeber zur Erfassung von End- oder Zwischenstellungen des Ventils.

Es ist Aufgabe der vorliegenden Erfindung, eine Vorrichtung der gattungsgemäßen Art derart auszugestalten, dass sie weitgehend vorgefertigt und sehr einfach auf unterschiedliche Betriebsspannungen oder Datenprotokolle umrüstbar ist, dass der Lagerbestand dieser Vorrichtungen verringert werden kann und dass das Erreichen wirtschaftlicher Stückzahlen leichter als bisher möglich ist.

### ZUSAMMENFASSUNG DER ERFINDUNG

Diese Aufgabe wird durch die Merkmale des Anspruchs 1 gelöst. Vorteilhafte Ausgestaltungen der Vorrichtung gemäß der Erfindung sind Gegenstand der Unteransprüche.

Dabei besteht ein erfinderischer Grundgedanke darin, sämtliche möglichen Ausstattungsvarianten der Steuervorrichtung, die durch unterschiedliche Betriebsspannungen und/oder Datenprotokolle gegeben sind, mit einer standardisierten internen Steuereinheit, einer sog. Basiseinheit, die eine standardisierte Betriebsspannung aufweist, zu betreiben. Diese interne Steuereinheit steuert dann auch mit dieser standardisierten Betriebsspannung die als Pilotventile ausgestalteten Mittel zur Steuerung des Druckmittels. Die interne Steuereinheit kann zusammen mit einem Pilotventil oder zusammen mit bis zu drei Pilotventilen, unabhängig von der jeweiligen Betriebsspannung der externen Steuereinheit, vorgefertigt werden.

Ein zweiter erfinderischer Grundgedanke besteht darin, die Anpassung an die jeweilige Betriebsspannung der externen Steuereinheit (beispielsweise SPS) bzw. an die Datenkommunikation mit dieser in einen Anpassungsmodul zu legen, der über eine interne Schnittstelle mit der internen Steuereinheit und über eine externe Schnittstelle mit der externen Steuereinheit verbunden ist. Der Anpassungsmodul ist dabei derart ausgelegt, dass die jeweilige Signalstruktur der Steuereinheit und des Anpassungsmoduls an der internen Schnittstelle gleich sind. Weiterhin wird die interne Steuereinheit über den Anpassungsmodul spannungsversorgt, wobei durch den Anpassungsmodul eine Anpassung an die jeweilige Betriebsspannung der externen Steuereinheit erfolgt.

Die erfindungsgemäße Steuervorrichtung ist nicht nur auf Hubventile anwendbar, bei denen ein einziges, translatorisch bewegtes Schließglied gegen eine zugeordnete Sitzfläche arbeitet, sondern sie ist auch anwendbar auf sog. Doppelsitzventile mit zwei unabhängig voneinander betätigbaren Schließgliedern, die sowohl in der Schließ- als auch in der Offenstellung des Doppelsitzventils einen Leckagehohlraum zwischen sich einschließen, der über wenigstens einen Verbindungsweg mit der Umgebung des Doppelsitzventils verbunden ist. Dabei ist jedes Schließglied mit einer zugeordneten Ventilstange verbunden und wenigstens eine dieser Ventilstangen, vorzugsweise jene des unabhängig betätigbaren Schließgliedes, ist hinsichtlich ihrer jeweiligen Stellung in Verbindung mit dem zugeordneten Schließglied (Schließstellung, Offenstellung, Zwischenstellung) von dem Stellungsgeber der erfindungsgemäßen Steuervorrichtung überwacht.

Darüber hinaus ist die erfindungsgemäße Steuervorrichtung auch anwendbar auf Ventile, bei denen das Schließglied eine rotative Öffnungs- und Schließbewegung ausführt (beispielsweise Scheibenventile). Hier kann zum einen die rotative Bewegung der dem jeweiligen Schließglied zugeordneten Ventilstange durch die erfindungsgemäße Steuervorrichtung unmittelbar gesteuert und überwacht werden. Zum anderen kann aber auch die rotative Bewegung mittelbar dadurch gesteuert und überwacht werden, dass ein die rotative Ventilstangenbewegung erzeugender zugeordneter Ventilantrieb gesteuert und überwacht wird. In diesem Ventilantrieb wird in der Regel die rotative Bewegung des Schließgliedes und der zugeordneten Ventilstange über eine translatorische, hin- und hergehende Bewegung eines druckmittelbeaufschlagten Kolbens generiert, wobei es einfacher ist, diese translatorische Bewegung zu steuern und zu überwachen, als eine rotative.

Eine vorteilhafte Ausgestaltung der Steuervorrichtung gemäß der Erfindung sieht vor, dass die interne Steuereinheit mit einer standardisierten Betriebsspannung 24 VDC (Gleichspannung) arbeitet. Mit dieser standardisierten Betriebsspannung 24 VDC lassen sich die Standardeinsatzfälle abdecken und die interne Steuereinheit kann über die interne Schnittstelle direkt mit der externen Steuereinheit im Datenaustausch stehen.

Gemäß einer weiteren erfindungsgemäßen Ausgestaltung ist ein erster Anpassungsmodul als sog. AC-Interface Modul ausgeführt, der die Signale und den Signalpegel der mit der standardisierten Betriebsspannung arbeitenden internen Steuereinheit auf eine vorgegebene, beliebige Betriebsspannung im Bereich von 20 bis 130 VAC (Wechselspannung) umsetzt und an einer externen Schnittstelle, über die er mit der externen Steuereinheit verbunden ist, bereitstellt und auch in umgekehrter Richtung eine entsprechende Umsetzung vornimmt. Damit kann die standardisierte interne Steuereinheit über den ersten Anpassungsmodul mit jedweder externen Steuereinheit kommunizieren, die im Bereich von 20 bis 130 VAC betrieben wird. Die notwendigen Anpassungsmaßnahmen werden in den modular strukturierten ersten Anpassungsmodul gelegt und haben damit keinen Einfluss auf die Ausgestaltung und Auslegung der standardisierten internen Steuereinheit.

Weiterhin wird für das Verständnis der Erfindung ein zweiter Anpassungsmodul, ein sog. AS-Interface Modul, beschrieben, der die Signale und den Signalpegel der mit der standardisierten Betriebsspannung arbeitenden internen Steuereinheit auf die entsprechenden Signale und den Signalpegel eines mit einer zweiadrigen BUS-Leitung arbeitenden AS-Interface BUS Datenübertragungssystems umsetzt und an einer externen Schnittstelle, über die er mit der externen Steuereinheit verbunden ist, bereitstellt und auch in umgekehrter Richtung eine entsprechende Umsetzung vornimmt. Auch bei dieser Lösung, bei der der Datenaustausch zwischen der standardisierten internen Steuereinheit und der externen Steuereinheit nunmehr über eine zweiadrige BUS-Leitung erfolgt, liegen die Anpassungsmaßnahmen im modular strukturierten zweiten Anpassungsmodul, so dass auch hier die standardisierte interne Steuereinheit ohne Veränderung zur Anwendung kommen kann.

Darüber hinaus sind die erfinderischen Grundgedanken auch auf weitere BUS-Lösungen und weitere Wechsel- oder Gleichspannungen, mit denen die externen Steuereinheiten ggf. betrieben werden, übertragbar, wobei in jedem Falle die vorstehend beschriebene standardisierte interne Steuereinheit unverändert zum Einsatz kommen kann.

Die unterschiedlichen modularen Konfigurationen der erfindungsgemäßen Steuervorrichtung lassen sich besonders leicht realisieren, wenn, wie dies weiter vorgeschlagen wird, die externe Schnittstelle und die interne Schnittstelle jeweils als Klemmleiste ausgebildet ist. Dabei ist in vorteilhafter Weise die zweite Klemmleiste als Messerleiste ausgeführt, wobei gemäß einem weiteren Vorschlag die Kontaktstifte der Messerleiste an dem Anpassungsmodul ausgeführt sind.

Werden, wie dies ein weiterer Vorschlag vorsieht, die Kontaktstifte jeweils in einer zugeordneten Schraubklemme an der internen Steuereinheit befestigt, dann ergibt sich allein durch diese Kontaktierung eine sichere Verbindung zwischen dem Anpassungsmodul und der internen Steuereinheit, die dann zur absolut sicheren Verbindung dieser beiden modularen Bauteile nur noch über eine einzige formschlüssige Verbindung, beispielsweise eine einfache Schraubverbindung, an einer geeigneten Stelle miteinander zu verbinden sind.

### Erfindungsgemäßes AC-Interface Modul (erster Anpassungsmodul)

Der AC-Interface Modul dient zur Signalanpassung für den Austausch von Steuersignalen an Elektronik-Module in der internen Steuereinheit, die mit druckmittelbeaufschlagten (vorzugsweise pneumatischen) Antrieben zusammenarbeiten. Die interne Steuereinheit besteht aus einer auf einer standardisierten Betriebsspannung, beispielsweise einer Gleichspannung von 24 VDC basierenden Elektronik-Einheit, welche Steuersignale empfängt und Signale für Überwachungszwecke zur Verfügung stellt. Zusätzlich benötigt die interne Steuereinheit die standardisierte Betriebsspannung, im vorliegenden Fall eine Gleichspannung von 24 VDC.
Gerätetechnisch wird der vorgenannte Erfindungsgedanke dadurch realisiert, dass der AC-Interface Modul, der erste Anpassungsmodul, an die gleichfalls modular ausgebildete interne Steuereinheit angekoppelt wird. Im AC-Interface Modul erfolgt die Umsetzung einer beliebigen Wechselspannung im Bereich von 20 bis 130 Volt auf den Signalpegel der mit 24 VDC arbeitenden internen Steuereinheit (Basiseinheit), um Ansteuerungen der 24 VDC Pilotventile zu gewährleisten. Die Rückmeldesignale für die diskreten Ventilstellungen (Schließstellung, volle Offenstellung und ggf. Zwischenstellung(en)), die über die interne Steuereinheit zum AC-Interface Modul gelangen, werden dort wiederum auf den Eingangspegel dieses Moduls umgesetzt. Der Anwender kann dadurch mit einem Wechselspannungssignal Pilotventile ansteuern und erhält als Rückmeldung den gleichen AC Signalpegel (Wechselspannungs-Signalpegel) zurück.

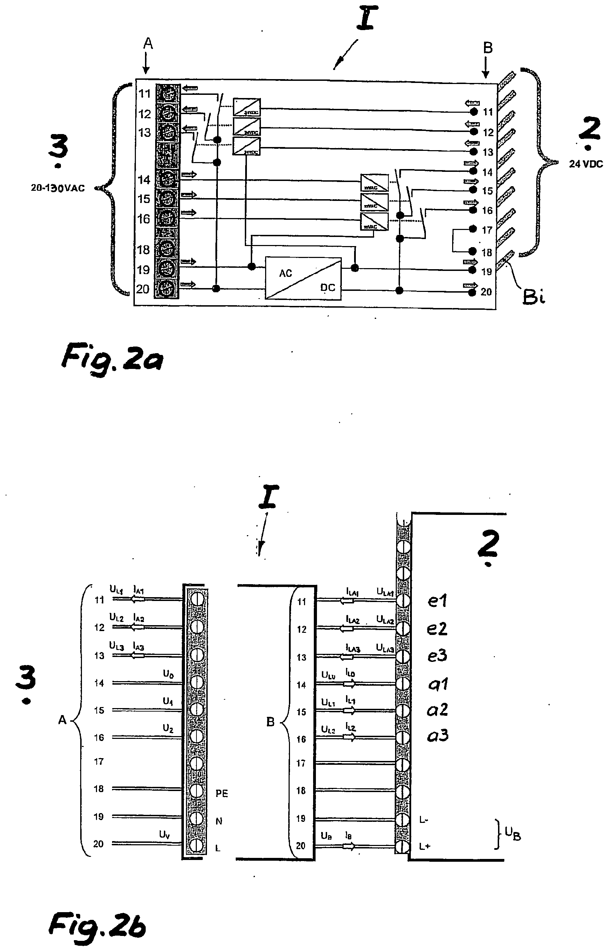

Einzelheiten des erfindungsgemäßen AC-Interface Moduls werden im Zusammenhang mit den **Figuren 2a** und **2b** der Zeichnung erläutert.

### Weiterhin beschriebenes AS-Interface Modul (zweiter Anpassungsmodul) für das Verständnis der Erfindung

Der weiterhin beschriebene AS-Interface Modul dient als optionaler Erweiterungsmodul zum Einsatz in Vorrichtungen zur Steuerung der Schaltbewegung eines Ventils, wobei die interne Steuereinheit (Basiseinheit) wiederum standardisiert ist und mit einer standardisierten Betriebsspannung, vorzugsweise einer Spannung von 24 VDC (Gleichspannung) arbeitet. Der AS-Interface Modul steht über den sog. AS-Interface BUS mit dem AS-Interface Master oder einem Gateway in Verbindung. Hier wird eine zweiadrige BUS-Leitung verwendet, welche gleichzeitig die Betriebsspannung für den AS-Interface Modul zur Verfügung stellt und über zwei Klemmen am AS-Interface Modul kontaktiert wird. Die Ankopplung des AS-Interface Moduls an die interne Steuereinheit erfolgt in gleicher Weise, wie dies vorstehend und im Zusammenhang mit dem AC-Interface Modul beschrieben wurde, nämlich über die interne Schnittstelle.

Im Normalfall, wenn die interne Steuereinheit unmittelbar mit der externen Steuereinheit binär kommuniziert, werden die Anschlussklemmen der internen Steuereinheit zur Signalübertragung an die externe Steuereinheit mit entsprechenden Leitungen verbunden, über die dann 24 VDC Binär-Signale zu dieser externen Steuereinheit (SPS) gelangen.

Im Falle einer Aufrüstung der externen Steuereinheit mit einem AS-Interface Modul sind nun lediglich die Leitungen zur externen Steuereinheit (SPS) zu entfernen und an gleicher Stelle ist der entsprechende AS-Interface Modul zu kontaktieren. Dies bedeutet, dass die standardisierte interne Steuereinheit nur eine Schnittstelle für Signale besitzt, die entweder auf direktem Wege zur externen Steuereinheit (SPS) gelangen, oder, für den Fall, dass der AS-Interface Modul angekoppelt ist, dass diese Signale in dem AS-Interface Modul auf das AS-Interface Datenprotokoll umgesetzt werden, sodass dann über das Datenkabel eine Kommunikation mit einem AS-Interface Master möglich ist.

Die E/A-Schnittstelle (Eingang/Ausgang-Schnittstelle) des AS-Interface Moduls wird über eine Messerleiste elektrisch mit der standardisierten internen Steuereinheit verbunden. Über diese Schnittstelle werden digitale Ausgangssignale vom AS-Interface Modul an die interne Steuereinheit sowie digitale Ausgangssignale der internen Steuereinheit an das AS-Interface Modul übertragen. Zusätzlich versorgt das AS-Interface Modul die interne Steuereinheit mit Betriebsspannung.

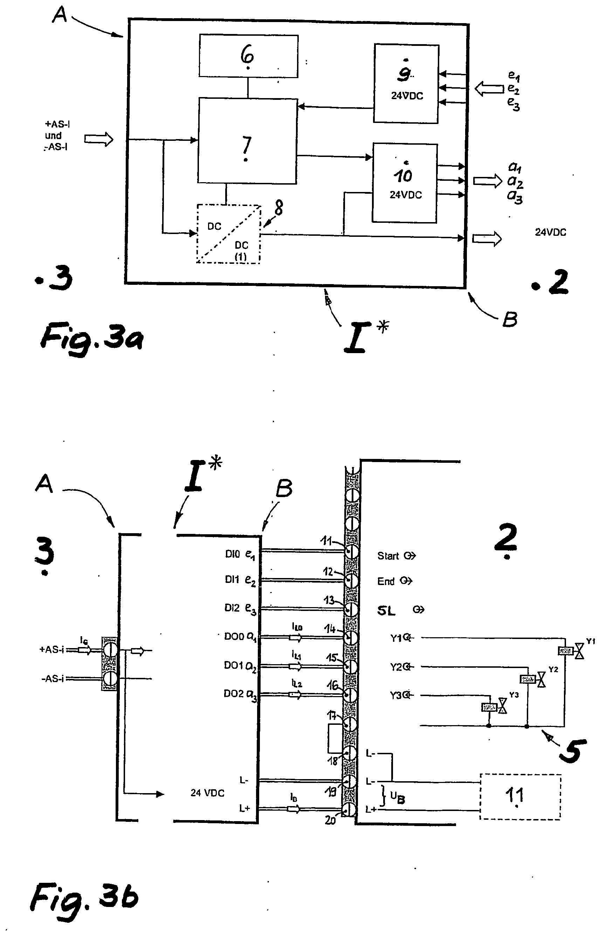

Einzelheiten des weiterhin beschriebenen AS-Interface Moduls werden im Zusammenhang mit den **Figuren 3a** und **3b** der Zeichnung beschrieben.

Die Vorteile der vorstehend vorgeschlagenen erfindungsgemäßen Lösung (AC-Interface Modul) und der weiterhin beschriebenen alternativen Lösung (AS-Interface Modul) werden nachfolgend noch einmal kurz zusammengestellt:
1. Anstelle einer Vielzahl spezieller interner Steuereinheiten wird an eine für alle Anwendungsfälle nutzbare standardisierte interne Steuereinheit, die vorzugsweise mit einer standardisierten Betriebsspannung 24 VDC arbeitet, entweder ein AC-Interface Modul oder, falls eine Datenübertragung mittels eines Datenbusses vorgesehen ist, ein AS-Interface Modul gekoppelt.
2. Aus der Konfiguration zu 1. ergeben sich eine Reduzierung von Entwicklungsmaßnahmen, weiterhin im Rahmen der Lagerhaltung eine Reduzierung der Sachnummern der Bestandteile der in Rede stehenden Steuervorrichtung, eine Reduzierung von notwendigen Zulassungsprüfungen sowie eine Reduzierung der Kapitalbindung am Lager.
3. Durch Nutzung der standardisierten internen Steuereinheit (standardisierte Betriebsspannung; 24 VDC-Modul als Basiseinheit) ist eine Vormontage der als Steuerkopf ausgebildeten Steuervorrichtung möglich.
4. Durch Anschluss des AS-Interface Moduls an eine interne Schnittstelle, die eine definierte Signalstruktur aufweist und somit quasi zu einer herstellerspezifischen Standardschnittstelle wird, ist eine Aufrüstung auf einen AS-Interface BUS möglich.
5. Durch Anschluss des AC-Interface Moduls an die unter Punkt 4. erwähnte standardisierte interne Schnittstelle ist eine Aufrüstung auf eine AC-Tauglichkeit für Weitbereichsbetrieb möglich.
6. Durch die Verwendung nur noch eines Pilotventiltyps (24 VDC) können andere Pilotventiltypen (24 Volt AC-Pilotventil; 115 Volt AC-Pilotventil) in der Lagerhaltung und der Verwendung entfallen.
7. Eine Umrüstung vom 24 VDC-Standardbetrieb auf AC-Interface- oder AS-Interface BUS-Betrieb erfordert keine Neujustierung der Rückmeldung der mit der Steuervorrichtung ausgerüsteten Ventile, sondern lediglich eine Ankopplung des entsprechenden Interface Moduls an die standardisierte interne Schnittstelle.
8. Durch feste Kontaktzuordnung an den Interface Modulen ist keine Signalvertauschung möglich.

### KURZBESCHREIBUNG DER ZEICHNUNGEN

Ausführungsbeispiele der Erfindung sind in den Figuren der Zeichnung dargestellt und werden nachfolgend beschrieben. Es zeigen
- **Figur 1**: in schematischer Darstellung ein beispielhaft ausgewähltes Normalventil mit pneumatischem Antrieb in Verbindung mit einer erfindungsgemäßen Steuervorrichtung, wobei letztere entweder mit einem erfindungsgemäßen AC-Interface Modul oder mit einem weiterhin beschriebenen AS-Interface Modul ausgestattet sein kann;
- Figur 2a: in schematischer Darstellung ein Prinzipschaltbild des erfindungsgemäßen AC-Interface Moduls, wie er in **Figur 1** angedeutet ist;
- **Figur 2b**: in schematischer Darstellung der AC-Interface Modul gemäß **Figur 2a** in seiner Ankopplung einerseits an eine interne Steuereinheit und andererseits an eine externe Steuereinheit;
- Figur 3a: in schematischer Darstellung das Prinzipschaltbild eines AS-Interface Moduls, wie er in **Figur 1** angedeutet ist und
- **Figur 3b**: die Ankopplung des AS-Interface Moduls gemäß **Figur 3a** an eine interne Steuereinheit einerseits und ein Datenbus-System andererseits.

### DETAILLIERTE BESCHREIBUNG

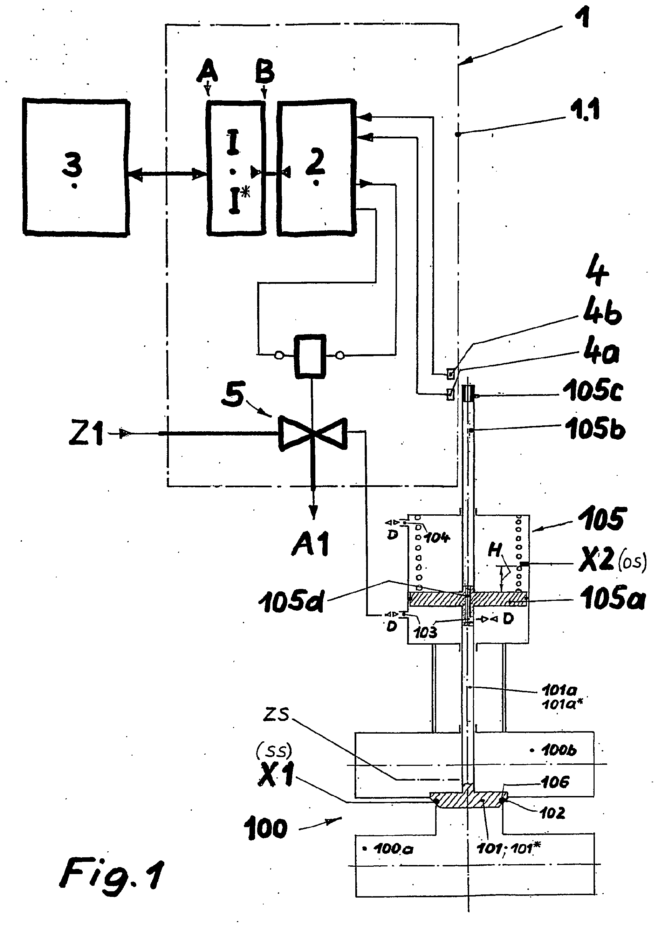

Eine Steuervorrichtung 1 gemäß der Erfindung **(****Figur 1****)** umfasst in einer Gehäuseeinheit 1.1 eine interne Steuereinheit 2, einen aus einem ersten und einem zweiten Stellungsgeber 4a, 4b bestehenden Stellungsgeber 4 und ein Mittel 5 (Pilotventil) zur Steuerung eines Druckmittels D. Für den Fall, dass die interne Steuereinheit 2 unmittelbar mit einer externen Steuereinheit 3 (z.B. eine speicherprogrammierbare Steuerung (SPS)) kommuniziert, ist die eben beschriebene Konfiguration Stand der Technik und dient der Steuerung der Schaltbewegung eines Ventils 100, welches im dargestellten Ausführungsbeispiel als Hubventil ausgeführt ist. Letzteres nimmt zwischen einem ersten und einem zweiten Ventilgehäuse 100a bzw. 100b ein Schließglied 101 auf. Dieses erfährt seine Betätigung über eine Ventilstange 101a, die mit einem Stellglied 105b, einer nach oben verlängerten Ventilstange, verbunden ist, an dem ein Permanentmagnet 105c befestigt ist. Das Schließglied 101 wirkt über eine Sitzdichtung 106 mit einer Sitzfläche 102 zusammen, es steuert eine nicht bezeichnete Verbindungsbohrung zwischen dem ersten und dem zweiten Ventilgehäuse 100a bzw. 100b und es verfügt über eine erste feste Ventilstellung, die dargestellte Schließstellung SS, und eine zweite feste Ventilstellung, die Offenstellung OS. Zwischen diesen beiden festen Ventilstellungen, den beiden Endstellungen, wird ein sog. Vollhub H des Schließgliedes 101 ausgebildet. Darüber hinaus kann das Schließglied 101 erforderlichenfalls auch in eine Teiloffenstellung, eine Zwischenstellung ZS, verbracht werden.

Neben dem vorgenannten Ventil mit einem einzigen Schließglied 101, einem sog. Normalventil, kann die erfindungsgemäße Steuervorrichtung 1 auch Anwendung finden an einem sog. Doppelsitzventil, welches zwei voneinander unabhängig betätigbare Schließglieder, das Schließglied 101 und ein zweites Schließglied 101*, aufweist, die über zugeordnete Ventilstangen, die Ventilstange 101 a für das Schließglied 101 und eine zweite Ventilstange 101a* für das zweite Schließglied 101*, betätigt werden.

Zur Realisierung des Vollhubes H der beiden vorgenannten Ventiltypen wird jeweils in einem Ventilantrieb 105 ein über die Ventilstange 101 a mit dem unabhängig angetriebenen Schließglied 101 verbundener Kolben 105a mit dem Druckmittel D über einen ersten Druckmittelanschluss 103 entweder von außerhalb des Ventilantriebs 105 oder über eine Bohrung 105d von innerhalb desselben beaufschlagt, wobei diese Bohrung 105d über nicht dargestellte Verbindungswege in den Innenraum der Gehäuseeinheit 1.1 ausmündet und dort über das Pilotventil 5 mit einer Druckmittel-Zufuhr Z1 verbunden ist.

Die definierte erste Endstellung des Schließgliedes 101 in seiner Schließstellung SS, die erste feste Ventilstellung, wird über seine metallische Anlage auf der zugeordneten Sitzfläche 102 bewirkt. Letztere bildet eine feste erste Stellungsbegrenzung X1 (erster metallischer Anschlag). Die Offenstellung OS des Ventiltellers 101, die zweite Endstellung und damit die zweite feste Ventilstellung, wird beispielsweise, wie dies schematisch dargestellt ist, durch Anlage des Kolbens 105a an einer zweiten Stellungsbegrenzung X2 im Ventilantrieb 105 (zweiter metallischer Anschlag) realisiert. Die beiden Endstellungen, die gezeigte Schließstellung SS und die volle Offenstellung OS, werden durch den ersten Stellungsgeber 4a bzw. den zweiten Stellungsgeber 4b erfasst und an die interne Steuereinheit 2 rückgemeldet.

Letztere steuert das Pilotventil 5 an, über welches das Druckmittel D von der Druckmittel-Zufuhr Z1 in einen Raum innerhalb des Ventilantriebs 105 unterhalb des Kolbens 105a gelangt. Es handelt sich im vorliegenden Falle um einen sog. federschließenden Ventilantrieb 105, der das Druckmittel D über das Pilotventil 5 und eine Druckmittel-Abfuhr A1 aus dem Raum unterhalb des Kolbens 105a verdrängt, wenn das Pilotventil 5 nicht angesteuert ist.

Darüber hinaus ist im gezeigten Ausführungsbeispiel weiterhin vorgesehen, den Ventilteller 101 im nicht angesteuerten Zustand mittels einer Zusatzkraft auf seine Sitzfläche 102 zu pressen. Hierzu wird über einen zweiten Druckmittelanschluss 104 der Kolben 105a auf der rückwärtigen Seite mit Druckmittel D beaufschlagt.

Die Ansteuerung des zweiten Druckmittelanschlusses 104 erfolgt über ein nicht dargestelltes sog. NICHT-Element, das im Bedarfsfall und immer dann, wenn keine Ansteuerung des Kolbens 105a über den ersten Druckmittelanschluss 103 vorliegt, eine Ansteuerung erfährt. Das nicht dargestellte NICHT-Element wird gleichfalls durch die interne Steuereinheit 2 angesteuert.

Die vorstehend beschriebene Steuervorrichtung 1, die den Stand der Technik bildet, erfordert eine jeweils speziell ausgebildete interne Steuereinheit 2, wenn letztere mit einer anderen Betriebsspannung arbeitet als die externe Steuereinheit 3, mit der sie verbunden ist und im Datenaustausch steht. Entsprechende weitere Anpassungsmaßnahmen sind erforderlich, wenn das Pilotventil 5 eine vom 24 VDC-Standard abweichende Betriebsspannung aufweist.

Hier setzt nun die erfindungsgemäße Lösung an, indem die Anpassungsmaßnahmen nicht in die interne Steuereinheit 2 gelegt werden, sondern entweder in einen erfindungsgemäßen ersten Anpassungsmodul I, einen sog. AC-Interface Modul, oder alternativ, wenn ein Datenbus-System vorgesehen ist, in einen weiterhin beschriebenen zweiten Anpassungsmodul I*, einen sog. AS-Interface Modul. Der AC- oder der AS-Interface Modul I bzw. I* ist jeweils einerseits über eine interne Schnittstelle B, eine zweite Klemmleiste, an die interne Steuereinheit 2 und andererseits über eine externe Schnittstelle A an die externe Steuereinheit 3 angekoppelt (siehe auch **Figuren 2a, 2b** und **3a, 3b****).**

### Erfindungsgemäßer AC-Interface Modul 1 (erster Anpassungsmodul)

Das Gehäuse für den AC-Interface Modul I (erster Anpassungsmodul) **(****Figur 2a****)** besitzt vorzugsweise eine im Wesentlichen quaderförmige Bauform, die möglichst geringe Abmessungen aufweist und die Elektronik vollständig umschließt. Zur Befestigung des AC-Interface Moduls I an der internen Steuereinheit 2 dient eine an ersterem befindliche Lasche mit einer Bohrung, so dass beispielsweise durch eine Verschraubung eine formschlüssige Verbindung zwischen diesen beiden Bauteilen herzustellen ist. Die externe Verkabelung (Verbindung von der externen Steuereinheit 3 (z.B. eine SPS)) zum AC-Interface-Modul I wird an letzterem auf der ersten Klemmleiste A aufgelegt. Die Verbindung von dem AC-Interface Modul I zur internen Steuereinheit 2 erfolgt über die als Messerleiste ausgebildete zweite Klemmleiste B, wobei Kontaktstifte Bi der Messerleiste B direkt in die an der internen Steuereinheit 2 befindlichen Klemmen eingeschoben und verschraubt werden. Die erste Klemmleiste A und die zweite Klemmleiste B besitzen jeweils Klemmen 11 bis 20, deren jeweilige Zuordnung bzw. Verwendung aus **Figur 2b** ersichtlich ist. Die Klemmen 11 bis 13 sind den Eingängen e₁, e₂ und e₃ für die Rückmeldungen der festen Ventilstellungen (Schließstellung SS, Offenstellung OS und ggf. Zwischenstellung ZS) zugeordnet. Die Klemmen 14 bis 16 sind für die zu den Pilotventilen Y1, Y2 und Y3 (s. Figur 3b) führenden Ausgänge a₁, a₂ und a₃ vorgesehen.

### 1. Die elektrischen Parameter für die zweite Klemmleiste B sind folgende:

| | |
|---|---|
| Anschlussklemme: | Messerleiste |
| Betriebsspannung für Steuereinheit 2 (L+, L-): | U_{B} = 24 VDC (18 - 30 VDC) |
| Betriebsstrom für Steuereinheit 2: | I_{B} |
| Steuerstrom: | I_{L}; Gleichzeitigkeitsfaktor max. 2 (I_{L0} = I_{L1} = I_{L2}) |
| Signalstrom: | I_{LAx} = I_{LA1} = I_{LA2} = I_{LA3} |
| Ansteuerspannung: | U_{LX} = U_{L0} = U_{L1} = U_{L2} = 24VDC |
| Signalspannung: | U_{LAx} = U_{LA1} = U_{LA2} = U_{LA3} |

Alle Spannungspotentiale für die zweite Klemmleiste B sind bezogen gegen L-.

### 2. Die elektrischen Parameter für die erste Klemmleiste A sind folgende:

| | |
|---|---|
| Anschlussklemme : | Schraubklemmen |
| Betriebsspannung : | U_{V} = 20 -130 VAC (zwischen Nullleiter N und spannungsführender Leitung L) |
| Ansteuerspannung : | U_{X} = U₀ = U₁ = U₂ |
| Signalspannung : | U_{LX} = U_{L1} = U_{L2} = U_{L3} |
| Strombelastbarkeit : | I_{Ax} = I_{A1} = I_{A2} = I_{A3} (Gleichzeitigkeitsfaktor max. 2) |

Alle Spannungspotenziale für die erste Klemmleiste A sind bezogen gegen den Nullleiter N; der Schutzleiter ist mit PE gekennzeichnet.

### Weiterhin beschriebener AS-Interface Modul I* (zweiter Anpassungsmodul)

Der Aufbau des AS-Interface Moduls I* (zweiter Anpassungsmodul) ist prinzipiell aus Figur 3a ersichtlich. Er verfügt im Wesentlichen über einen Adressspeicher 6, einen AS-i Chip 7, einen Spannungswandler 8, eine Input Ebene 9 (24 VDC) und ein Output Ebene 10 (24 VDC). Bezogen auf die Zeichnungslage ist der AS-Interface Modul I* rechtsseitig (interne Schnittstelle B) mit der internen Steuereinheit 2 verbunden und linksseitig (externe Schnittstelle A) über die sog. BUS-Anschlüsse mittels einer zweiadrigen BUS-Leitung (+AS-i und -AS-i) mit der externen Steuereinheit 3. Es ist weiterhin ersichtlich, dass der AS-Interface Modul I* von der internen Steuereinheit 2 her gesehen drei Eingänge e₁, e₂ und e₃ für Rückmeldungen aus den Stellungen des Ventils aufweist (Klemmen 11 bis 13) und dass er über drei Ausgänge a₁, a₂ und a₃ für die Pilotventile 5 (Y1, Y2, Y3) mit der internen Steuereinheit 2 verbunden ist (Klemmen 14 bis 16). Darüber hinaus wird die interne Steuereinheit 2 von dem AS-Interface Modul I* mit U_{B} = 24 VDC Betriebsspannung versorgt; an den mit der Betriebsspannung U_{B} versorgten Klemmen 19 und 20 ist außerdem die Elektronik einer Sensorik 11 der internen B Steuereinheit 2 angeschlossen (s. **Figur 3b****).** Die übrige Klemmenbelegung der internen Schnittstelle B ist aus **Figur 2b** ersichtlich.

Die logische Zuordnung der Ein- und Ausgänge und der Anschlussklemmen ist aus **Figur 3b** ersichtlich:
Eingang e₁ (Datenbit DI0) am ASI Modul ←Anschlussklemme 11 (Start →)
Eingang e₂ (Datenbit DI1) am ASI Modul ←Anschlussklemme 12 (End →)
Eingang e₃ (Datenbit DI2) am ASI Modul ←Anschlussklemme 13 (Sitzreinigung SL →)
Ausgang a₁ (Datenbit DO0) vom ASI Modul →Anschlussklemme 14 (Y1 ←)
Ausgang a₂ (Datenbit DO1) vom ASI Modul →Anschlussklemme 15 (Y2 ←)
Ausgang a₃ (Datenbit DO2) vom ASI Modul →Anschlussklemme 16 (Y3 ←)

### Die elektrischen Parameter des weiterhin beschriebenen AS-Interface Moduls I* sind folgende:

### 1. Busanschluss

| | |
|---|---|
| Anschlussklemme : | +AS-i/-AS-i (gemäß ASI-Spezifikation) |
| Gesamtstromaufnahme : | I_{G} |

### 2. Eingänge e₁ bis es für Ventilrückmeldungen von der internen Steuereinheit 2

Signalpegel : 24 VDC

### 3. Ausgänge a₁ bis a₃ für Pilotventilansteuerungen zur internen Steuereinheit 2

| | |
|---|---|
| Signalpegel : | 24 VDC |
| Gleichzeitigkeitsfaktor : | max. 2 Ausgänge gleichzeitig |

### 4. Betriebsspannung für interne Steuereinheit 2

| | |
|---|---|
| Spannungspegel : | U_{B} = 24 VDC (18 - 30 VDC) |
| Strombelastbarkeit : | I_{B} |

### BEZUGSZEICHENLISTE DER VERWENDETEN ABKÜRZUNGEN

### Figur 1

1 Steuervorrichtung
1.1 Gehäuseeinheit
2 interne Steuereinheit
3 externe Steuereinheit (z.B. speicherprogrammierbare Steuerung)
4 Stellungsgeber
4a erster Stellungsgeber
4b zweiter Stellungsgeber
5 Mittel zur Steuerung des Druckmittels D (Pilotventil(e))
I erster Anpassungsmodul (AC-Interface Modul)
I* zweiter Anpassungsmodul (AS-Interface Modul)
100 Ventil (Hubventil)
100a erstes Ventilgehäuse
100b zweites Ventilgehäuse
101 Schließglied
101* zweites Schließglied
101a Ventilstange
101a* zweite Ventilstange
102 Sitzfläche
103 erster Druckmittelanschluss
104 zweiter Druckmittelanschluss
105 Ventilantrieb
105a Kolben
105b Stellglied/Ventilstange
105c Magnet/Permanentmagnet
105d Bohrung (innerhalb der Ventilstange 101 a)
106 Sitzdichtung
A1 Druckmittel-Abfuhr
A externe Schnittstelle (erste Klemmleiste)
B interne Schnittstelle (zweite Klemmleiste)
D Druckmittel
H Vollhub
OS Offenstellung
SS Schließstellung
ZS Zwischenstellung
X1 erste Stellungsbegrenzung
X2 zweite Stellungsbegrenzung
Z1 Druckmittel-Zufuhr

### Figuren 2a, 2b

### Klemmleiste A

L spannungsführende Leitung (Wechselspannung)
N Nullleiter
PE Schutzleiter
I_{Ax} Strombelastbarkeit
I_{A1} =I_{A2} =I_{A3} Strombelastbarkeit (Gleichzeitigkeitsfaktor max. 2)
U_{Lx} Signalspannung
U_{L1} =U_{L2} =U_{L3}
Uv Betriebsspannung
Uₓ Ansteuerspannung
U₀ =U₁ =U₂

### Klemmleiste B

a₁ erster Ausgang (für erstes Pilotventil Y1)
a₂ zweiter Ausgang (für zweites Pilotventil Y2)
a₃ dritter Ausgang (für drittes Pilotventil Y3)
e₁ erster Eingang (für erste Rückmeldung)
e₂ zweiter Eingang (für zweite Rückmeldung)
es dritter Eingang (für dritte Rückmeldung)
Bi Kontaktstifte
L+ positives Potenzial
L- negatives Potenzial
I_{B} Betriebsstrom für interne Steuereinheit 2
I_{Lx} Steuerstrom
I_{L0} =I_{L1} =I₂ Steuerstrom (Gleichzeitigkeitsfaktor max. 2)
I_{LAx} Signalstrom
I_{LA1} =I_{LA2} =I_{LA3}
U_{B} Betriebsspannung für interne Steuereinheit 2
U_{Lx} Ansteuerspannung
U_{L0} =U_{L1} =U_{L2}
U_{LAx} Signalspannung
U_{LA1} =U_{LA2} =U_{LA3}

### Figuren 3a, 3b

- 6: Adressspeicher
- 7: AS-i Chip
- 8: Spannungswandler
- 9: Input Ebene 24 VDC
- 10: Output Ebene 24 VDC
- 11: Elektronik (Sensorik)
- SL: Sitzreinigung (Zwischenstellung ZS)
- Y1: erstes Pilotventil
- Y2: zweites Pilotventil
- Y3: drittes Pilotventil

### Klemmleiste A

+AS-i erster Busanschluss (Anschlussklemme gemäß ASI-Spezifikation)
-AS-i zweiter Busanschluss (Anschlussklemme gemäß ASI-Spezifikation) I_{G} Gesamtstromaufnahme

## Patentansprüche

1. Vorrichtung zur Steuerung der Schaltbewegung eines Ventils, wobei die Steuervorrichtung (1) modular strukturiert ist und das Ventil (100) wenigstens eine ein Schließglied (101; 101*) tragende, translatorisch oder rotativ bewegte Ventilstange (101a; 101a*) aufweist, die Ventilstange(n) (101a; 101a*) mittels eines druckmittelbeaufschlagten Ventilantriebes (105) in zwei Endstellungen, eine Schließ-(SS) und eine Offenstellung (OS), verbracht wird/werden, erforderlichenfalls wenigstens eine Ventilstange (101 a; 101a*) in eine zwischen diesen Endstellungen positionierte, eine Teiloffenstellung des zugeordneten Schließgliedes (101; 101*) bildende Zwischenstellung (ZS) verbracht wird, die Steuervorrichtung (1) Mittel (5) zur Steuerung des Druckmittels (D) für den Ventilantrieb (105) sowie einen Stellungsgeber (4) aufweist, der wenigstens die Endstellungen und ggf. die Zwischenstellung (ZS) der Ventilstange (101a; 101a*) in Bezug auf ein festgelegtes Bezugssystem erfasst und diesbezügliche aktuelle Stellungsmeldungen liefert, und die Steuervorrichtung (1) eine modulare, interne Steuereinheit (2) aufweist, die einerseits mit einer externen Steuereinheit (3) im Umfeld des Ventils (100) im Datenaustausch steht und andererseits die Mittel (Pilotventile) (5) zur Steuerung des Druckmittels (D) ansteuert, **dadurch gekennzeichnet,**
• **dass** die interne Steuereinheit (2) eine standardisierte Betriebsspannung (UB) aufweist,
• **dass** auch das(die) Pilotventil(e) (5) mit der standardisierten Betriebsspannung (U_{B}) arbeitet(arbeiten),
• **dass** in der Steuervorrichtung (1) ein Anpassungsmodul (I; 1*) Aufnahme findet,
• der über eine interne Schnittstelle (B) mit der internen Steuereinheit (2) und über eine externe Schnittstelle (A) mit der externen Steuereinheit (3) verbunden ist,
• **dass** die jeweilige Signalstruktur der Steuereinheit (2) und des Anpassungsmoduls (I; 1*) an der internen Schnittstelle (B) gleich sind, und
• **dass** die interne Steuereinheit (2) über den Anpassungsmodul (I; 1*) spannungsversorgt ist, wobei durch den Anpassungsmodul (1, I*) eine Anpassung an die jeweilige Betriebsspannung der externen Steuereinheit (3) erfolgt.

2. Vorrichtung nach Anspruch 1,
**dadurch gekennzeichnet,**
**dass** die standardisierte Betriebsspannung (U_{B}) 24 VDC (Gleichspannung) beträgt.

3. Vorrichtung nach Anspruch 1 oder 2,
**dadurch gekennzeichnet,**
**dass** der erste Anpassungsmodul (AC-Interface Modul) (I) die Signale und den Signalpegel der mit der standardisierten Betriebsspannung (U_{B}) arbeitenden internen Steuereinheit (2) auf eine vorgegebene, beliebige Betriebsspannung (Uv) im Bereich von 20 bis 130 VAC (Wechselspannung) umsetzt und an einer externen Schnittstelle (A), über die er mit der externen Steuereinheit (3) verbunden ist, bereitstellt und auch in umgekehrter Richtung eine entsprechende Umsetzung vornimmt.

4. Vorrichtung nach einem der Ansprüche 1 bis 3,
**dadurch gekennzeichnet,**
**dass** die externe Schnittstelle (A) als erste Klemmleiste ausgebildet ist.

5. Vorrichtung nach einem der Ansprüche 1 bis
**dadurch gekennzeichnet,**
**dass** die interne Schnittstelle (B) als zweite Klemmleiste ausgebildet ist.

6. Vorrichtung nach Anspruch 5
**dadurch gekennzeichnet,**
**dass** die zweite Klemmleiste (B) als Messerleiste ausgebildet ist.

7. Vorrichtung nach Anspruchs 6,
**dadurch gekennzeichnet,**
**dass** Kontaktstifte (Bi) der Messerleiste (B) an dem Anpassuagsmodul (I; 1*) ausgeführt sind.

8. Vorrichtung nach Anspruch 7,
**dadurch gekennzeichnet,**
**dass** die Kontaktstifte (Bi) jeweils in einer zugeordneten Schraubklemme an der internen Steuereinheit (2) befestigt sind.

9. Vorrichtung nach einem der Ansprüche 1 bis 8,
**dadurch gekennzeichnet,**
**dass** der Anpassungsmodul (I; 1*) formschlüssig mit der internen Steuereinheit (2) verbunden ist.

## Claims

1. Device for controlling the switching movement of a valve, wherein: the control device (1) has a modular structure and the valve (100) comprises at least one valve rod (101a; 101a*), which supports a closure member (101; 101*) and is moved in translatory or rotative manner, the valve rod(s) (101a; 101a*) is/are brought into two end positions, a closed (SS) and an open (OS) position by means of a valve actuator (105) acted upon by pressure medium, if necessary at least one valve rod (101a; 101a*) is brought into an intermediate position (ZS) located between these end positions and forming a partially open position of the associated closure member (101; 101*), the control device (1) comprises means (5) for controlling the pressure medium (D) for the valve actuator (105) as well as a position indicator (4), which detects at least the end positions and, if applicable, the intermediate position (ZS) of the valve rod (101a; 101a*) with regard to a fixed reference system and supplies actual position indications relating thereto, and the control device (1) comprises a modular, internal control unit (2), which performs data exchange with an external control unit (3) in the surroundings of the valve (100) on the one hand and actuates means (pilot valves) (5) for controlling the pressure medium (D) on the other hand, **characterised in that**
• the internal control unit (2) comprises a standardised operating voltage (UB ),
• also the pilot valve(s) (5) operates (operate) with the standardised operating voltage (UB );
• an adapting module (I; I*) is accommodated in the control device (1),
• which is connected to the internal control unit (2) through an internal interface (B),
• the respective signal structure of the control unit (2) and of the adapting module (I; I*) are equal at the internal interface (B), and
• the internal control unit (2) is supplied with voltage through the adapting module (I; I*).

2. Device according to claim 1; **characterised in that** the standardised operating voltage (UB ) is 24 VDC (direct voltage).

3. Device according to claim 1 or 2, **characterised in that** the first adapting module (AC-interface module) (I) converts the signals and the signal level of the internal control unit (2) operating with the standardised operating voltage (UB ) to any predetermined operating voltage (UV ) in the range from 20 to 130 VAC (alternating voltage) and provides it at an external interface (A), through which it is connected with the external control unit (3), and also performs a corresponding conversion in the opposite direction.

4. Device according to one of the claims 1 to 3, **characterised in that** the external interface (A) is formed as a first terminal strip.

5. Device according to one of the claims 1 to 4, **characterised in that** the internal interface (B) is formed as a second terminal strip.

6. Device according to claim 5, **characterised in that** the second terminal strip (B) is formed as a blade connector strip.

7. Device according to claim 6, **characterised in that** contact pins (Bi) of the blade connector strip (B) are provided at the adapting module (I; I*).

8. Device according to claim 7, **characterised in that** the contact pins (Bi) are each attached to an associated screw terminal at the internal control unit (2).

9. Device according to one of the claims 1 to8, **characterised in that** the adapting module (I ; I*) is connected positively fitting with the internal control unit (2).

## Revendications

1. Dispositif pour commander le mouvement de commutation d'une soupape, le dispositif de commande (1) étant structuré de manière modulaire et la soupape (100) présentant au moins une tige de soupape (101a ; 101a*) déplacée en translation ou en rotation portant un organe de fermeture (101 ; 101*), la/les tige(s) de soupape (101a ; 101a*) étant transportée(s) dans deux positions terminales, une position de fermeture (SS) et une position d'ouverture (OS), à l'aide d'un entraînement de soupape (105) alimenté par un milieu sous pression, le cas échéant au moins une tige de soupape (101a; 101a*) étant transportée dans une position intermédiaire (ZS) formant une position d'ouverture partielle de l'organe de fermeture affecté (101; 101*), positionnée entre lesdites positions terminales, le dispositif de commande (1) présentant des moyens (5) de commande du milieu sous pression (D) pour l'entraînement de soupape (105) ainsi qu'un transmetteur de position (4), qui capte au moins les positions terminales et le cas échéant la position intermédiaire (ZS) de la tige de soupape (101a ; 101a*) par rapport à un système de référence déterminé et fournit des indications de position actuelles en rapport à celui-ci, et le dispositif de commande (1) présentant une unité de commande interne (2) modulaire, qui d'une part échange des données avec une unité de commande externe (3) dans l'environnement de la soupape (100) et d'autre part actionne les moyens (soupapes pilotes) (5) de commande du milieu sous pression (D), **caractérisé en ce que**
• l'unité de commande interne (2) présente une tension de service (U_{B}) standard,
• la/les soupape(s) pilote(s) (5) fonctionne(nt) également avec la tension de service (U_{B}) standard,
• dans le dispositif de commande (1) est logé un module d'adaptation (I; I*),
• qui est connecté à l'unité de commande interne (2) par une interface interne (B),
• les structures de signal respectives de l'unité de commande (2) et du module d'adaptation (I ; I*) au niveau de l'interface interne (B) sont égales, et
• l'unité de commande interne (2) est alimentée en courant par le module d'adaptation (I ; I*).

2. Dispositif selon la revendication 1,
**caractérisé en ce que**
la tension de service (U_{B}) standard est de 24 VDC (tension continue).

3. Dispositif selon la revendication 1 ou 2,
**caractérisé en ce que**
le premier module d'adaptation (module AC-Interface) (I) convertit les signaux et le niveau de signal de l'unité de commande interne (2) fonctionnant avec la tension de service (U_{B}) standard à une tension de service (Uv) quelconque prédéfinie dans la plage allant de 20 à 130 VAC (tension alternative) et met ceux-ci à disposition à une interface externe (A), par laquelle il est connecté à l'unité de commande externe (3) et opère également une conversion correspondante dans le sens inverse.

4. Dispositif selon l'une des revendications 1 à 3,
**caractérisé en ce que**
l'interface externe (A) est constituée en tant que première plaque à bornes de connexion.

5. Dispositif selon l'une des revendications 1 à 4,
**caractérisé en ce que**
l'interface interne (B) est constituée en tant que seconde plaque à bornes de connexion.

6. Dispositif selon la revendication 5,
**caractérisé en ce que**
la seconde plaque à bornes de connexion (B) est constituée en tant que réglette de contacts à couteaux.

7. Dispositif selon la revendication 6,
**caractérisé en ce que**
des broches de contact (Bi) de la réglette de contacts à couteaux (B) sont réalisées sur le module d'adaptation (I ; I*).

8. Dispositif selon la revendication 7,
**caractérisé en ce que**
les broches de contact (Bi) sont fixées respectivement dans une borne à vis affectée au niveau de l'unité de commande interne (2).

9. Dispositif selon l'une des revendications 1 à 8,
**caractérisé en ce que**
le module d'adaptation (I ; I*) est connecté à l'unité de commande interne (2) par retenue mécanique.
